# FASCICULE DE BREVET EUROPEEN

(11) **EP 0 714 795 B1**
(45) Date de publication et mention de la délivrance du brevet: **10.02.1999**
(21) Numéro de dépôt: 95117551.2
(22) Date de dépôt: 08.11.1995
(51) Int. Cl.: B60C 29/02, B60C 25/18

(54) **Anneau d'étanchéité avec appendice**
Dichtungsstreifen mit Ansatzteil
Sealing ring with appendix

(30) Priorité: 28.11.1994 FR 9414339
(43) Date de publication de la demande: 05.06.1996
(73) Titulaire: COMPAGNIE GENERALE DES ETABLISSEMENTS MICHELIN - MICHELIN & CIE, 63040 Clermont-Ferrand Cédex (FR)
(72) Inventeur: Girard, Dominique, F-63119 Chateaugay (FR)
(74) Mandataire: Devaux, Edmond-Yves

(56) Documents cités:
- EP-A- 0 505 810
- DE-A- 2 414 885
- FR-A- 1 118 582

## Description

La présente invention concerne un anneau d'étanchéité d'un pneumatique sans chambre à air pour engin de manutention, ledit anneau d'étanchéité étant disposé sur le fond de la jante de service du pneumatique et entre les parois intérieures des deux bourrelets dudit pneumatique.

Le procédé de gonflage d'un ensemble tel que décrit ci-dessus prévoit de munir l'anneau d'étanchéité d'un orifice cylindrique dans lequel est inséré un tube pourvu à son extrémité radialement extérieure d'un filetage servant au vissage d'un écrou après mise en place d'une rondelle d'étanchéité, et à son extrémité radialement intérieure d'un deuxième filetage sur lequel on vient visser une valve dite "simple coude" ou une rallonge coudée rigide ou souple, après mise en place d'une deuxième rondelle d'étanchéité.

Afin de remédier aux inconvénients dus à un tel dispositif de gonflage, et plus particulièrement de remédier aux difficultés de montage de l'anneau d'étanchéité sur la jante de service, aux diffficultés de mise en place de la branche de valve, aux difficultés de manutention provoquées par le vissage de la valve, la demande FR 93/06609, non publiée, prévoit un dispositif de gonflage comprenant une valve de gonflage munie d'un élément mâle de verrouillage, autre qu'écrou, filetage et/ou autres éléments du même genre, ledit élément de verrouillage étant destiné à s'associer à un organe femelle de verrouillage extérieur à la valve, cet élément femelle pouvant être soit la fenêtre de la jante permettant le passage de la valve, soit une rondelle métallique située dans la face radialement intérieure de l'anneau d'étanchéité.

La tige de valve, mesurée entre son extrémité et l'élément mâle de verrouillage, a dans tous les cas une longueur au moins égale à l'épaisseur radiale de l'anneau d'étanchéité.

Les ensembles roulants pour engins de manutention n'étant généralement pas maniés avec beaucoup de précaution, ni pendant le montage et mise en place des pneumatiques, ni pendant leur utilisation, des pertes de pression sont parfois observées, soit après montage, soit après un certain temps de roulage, et plus particulièrement dans le cas de montage sur une jante à flasques centraux.

Un anneau d'étanchéité ayant les caractéristiques du préamble de la revendication 1 est décrit dans le document FR-A-1118582.

Afin d'avoir l'étanchéité dans toutes les configurations de l'ensemble roulant formé par le pneumatique, la jante et l'anneau d'étanchéité, ledit anneau, réalisé en matière élastique, comporte sur sa face radialement extérieure une protubérance ou appendice de hauteur au moins égale à 0,5 fois l'épaisseur de l'anneau, ledit anneau et son appendice ayant un orifice cylindrique commun de diamètre inférieur au diamètre de la tige de valve destinée à être insérée dans ledit orifice.

La protubérance ou appendice a préférentiellement ses bases radialement extérieure et intérieure ayant des dimensions transversale et circonférentielle maximales au plus égales à 0,15 fois la largeur de l'anneau, ladite largeur étant la largeur de la base radialement intérieure de l'anneau mesurée entre les deux bourrelets du pneumatique.

L'appendice peut avoir différentes formes tout en ayant les dimensions çi-dessus. Ces formes peuvent être des troncs de prisme, des troncs de pyramide, mais seront préférentiellement des troncs de cône et/ou des cylindres de sorte que la rigidité de la protubérance soit constante quel que soit le plan de flexion, tous les plans de flexion étant alors des plans principaux de la protubérance, ancrée à la base radialement extérieure de l'anneau d'étanchéité.

L'appendice peut être partie intégrante de l'anneau d'étanchéité, dans le sens où il est constitué du même mélange de caoutchouc vulcanisé que celui constituant l'anneau, l'ensemble anneau-appendice étant obtenu par la même opération de moulage et de vulcanisation. Il est aussi possible d'utiliser un appendice constitué d'un mélange caoutchouteux différent de celui de l'anneau : l'appendice est alors manufacturé lors d'une opération séparée et ensuite assemblé à l'anneau par tout moyen approprié et préférentiellement par une liaison caoutchouteuse vulcanisée à froid ou à chaud.

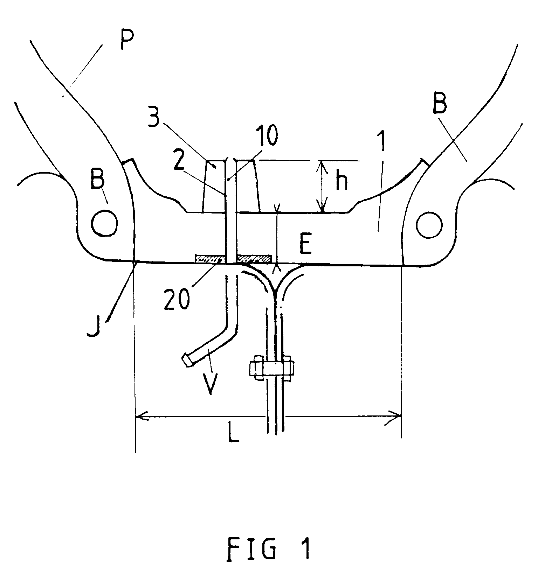

Les caractéristiques et avantages de l'invention seront mieux comprises à l'aide de la description qui suit et qui se réfère au dessin, illustrant à titre non limitatif un exemple d'exécution, et sur lequel l'unique figure 1 représente schématiquement, vu en section méridienne, un anneau d'étanchéité pourvu d'un appendice conforme à l'invention.

L'anneau d'étanchéité (1) est disposé circonférentiellement autour de la jante J à deux flasques centraux, sur laquelle est monté le pneumatique P, ledit anneau venant s'appuyer latéralement entre les deux bourrelets B du pneumatique P. Ledit anneau (1) est surmonté sur sa face radialement extérieure d'un appendice (3) en caoutchouc. La hauteur h dudit appendice (3) est égale à 0,8 fois l'épaisseur radiale E de l'anneau (1), épaisseur E qui est, dans l'exemple décrit, égale à 15mm, pour un pneumatique de dimension 7.00 R 15. Une hauteur h inférieure à 0,5 fois l'épaisseur E n'est pas suffisante pour assurer une étanchéité parfaite quelles que soient les conditions d'utilisation de l'ensemble roulant, l'épaisseur E étant axialement mesurée dans le plan équatorial de l'anneau d'étanchéité (1).

Quant à la base radialement intérieure de l'appendice (3), ses dimensions maximales transversale et circonférentielle sont égales entre elles puisque l'appendice, décrit et montré, a une forme de tronc de cône, ladite base étant un cercle de diamètre D égal à 0,05 fois la largeur L. Quant à la base radialement supérieure dudit appendice (3), elle est aussi circulaire de diamètre d inférieur à D.

L'anneau d'étanchéité (1) et son appendice (3) ont en commun un orifice cylindrique (10), destiné à recevoir la tige (2) d'une valve V, pourvue d'une plaque métallique (20) au titre d'élément mâle de verrouillage, qui, après passage par la fenêtre de passage de valve existante sur la jante J de montage, sera localisé entre ladite jante et la face radialement intérieure de l'anneau d'étanchéité (1). Comme décrit dans la demande française précitée, l'orifice (10) a un diamètre inférieur au diamètre de la tige de valve (2), ce qui permet un fort serrage du caoutchouc sur la tige, quelle que soit la position de la tige imposée par l'utilisation.

## Revendications

1. Anneau d'étanchéité (1) en matière élastique, pour ensemble roulant de manutention, composé d'une jante J et d'un pneumatique P, disposé sur ladite jante J et entre les parois intérieures des deux bourrelets B du pneumatique P, caractérisé en ce qu'il comporte sur sa face radialement extérieure une protubérance ou appendice (3) de hauteur h au moins égale à O,5 fois l'épaisseur E de l'anneau (1), ledit anneau (1) et son appendice (3) ayant un orifice cylindrique commun (10) de diamètre inférieur au diamètre de la tige de valve (2) destinée à être insérée dans ledit orifice.

2. Anneau selon la revendication 1, caractérisé en ce que les bases radialement extérieure et intérieure de l'appendice (3) ont des dimensions transversale et circonférentielle maximales au plus égales à O,15 fois la largeur L de l'anneau (1).

3. Anneau selon la revendication 2, caractérisé en ce que les bases de l'appendice (3) sont circulaires et de diamètres D et d différents, l'appendice ayant une forme de tronc de cône.

4. Anneau selon la revendication 1, caractérisé en ce que ledit anneau (1) et son appendice (3) sont en même matériau caoutchouteux et sont obtenus par une même opération de moulage et vulcanisation.

## Claims

1. A sealing ring (1) of elastic material for a rolling assembly used in handling equipment, composed of a rim J and a tyre P, the ring being arranged on said rim J between the inner walls of the two beads B of the tyre P, characterised in that it comprises, on its radially outer face, a protuberance or appendage (3) of a height h at least equal to 0.5 times the thickness E of the ring (1), said ring (1) and its appendage (3) having a common cylindrical opening (10) of a diameter less than the diameter of the valve stem (2) intended to be inserted in said opening.

2. A ring according to Claim 1, characterised in that the radially outer and inner bases of the appendage (3) have maximum transverse and circumferential dimensions equal to at most 0.15 times the width L of the ring (1).

3. A ring according to Claim 2, characterised in that the bases of the appendage (3) are circular and of different diameters D and d, the appendage having the shape of a truncated cone.

4. A ring according to Claim 1, characterised in that said ring (1) and its appendage (3) are of the same rubber material and are obtained by the same moulding and vulcanising operation.

## Patentansprüche

1. Dichtungsring (1) aus elastischem Material für eine rollende Fördereinrichtung, die aus einer Felge J und einem Reifen P zusammengesetzt ist, angeordnet auf der genannten Felge J und zwischen den innenliegenden Wänden zweier Wülste B des Reifens P,
**dadurch gekennzeichnet,** daß
er auf seiner radial äußeren Seite eine Ausstülpung oder ein Ansatzstück (3) mit einer Höhe h aufweist, die mindestens gleich ist dem 0,5-fachen der Dicke E des Ringes (1), und daß der Ring (1) sowie sein Ansatzstück (3) eine gemeinsame zylindrische Öffnung (10) mit einem Durchmesser aufweisen, die kleiner ist als der Durchmesser des Ventilröhrchens (2), das dazu bestimmt ist, in die genannte Öffnung eingeführt zu werden.

2. Ring nach Anspruch 1, dadurch gekennzeichnet, daß die radial äußere und innere Basis des Ansatzstücks (3) maximale Quer- und Umfangsabmessungen aufweisen, die höchstens gleich sind dem 0,15-fachen der Breite L des Ringes (1).

3. Ring nach Anspruch 2, dadurch gekennzeichnet, daß jede Basis des Ansatzstücks (3) kreisförmig ist und daß sie unterschiedliche Durchmesser D und d aufweisen, wobei das Ansatzstück eine Kegelstumpfform aufweist.

4. Ring nach Anspruch 1, dadurch gekennzeichnet, daß der genannte Ring (1) und sein Ansatzstück (3) aus dem gleichen gummiartigen Material bestehen und durch denselben Abformund Vulkanisationsvorgang erhalten sind.
